# EUROPEAN PATENT APPLICATION

(11) **EP 4 723 552 A1**
(43) Date of publication of application: **08.04.2026**
(21) Application number: 24822360.4
(22) Date of filing: 09.04.2024
(51) Int. Cl.: H04L 9/40

(54) **FIREWALL CONFIGURATION METHOD, NFVO, SERVER, AND STORAGE MEDIUM**

(30) Priority: 13.06.2023 CN 202310700836
(71) Applicant: ZTE CORPORATION, Shenzhen, Guangdong 518057 (CN)
(72) Inventor: FU, Yunlu, Shenzhen, Guangdong 518057 (CN)
(74) Representative: Canzler & Bergmeier Patentanwälte Partnerschaft mbB
(86) International application number: PCT/CN2024/086732
(87) International publication number: WO 2024/255405

(57) **Abstract**

Embodiments of the present application relate to the field of communications, and provide a firewall configuration method, a network function virtualization orchestrator, a server, and a computer-readable storage medium. The firewall configuration method includes: acquiring a cluster creation request including network information of a master of a target cluster to be created; creating and configuring, based on the network information of the master, a first virtual firewall between the master and a network function virtualization orchestrator; creating the master, and creating at least one node after the master is created and enters an operation state; and creating and configuring, based on network information of each node having been created and the network information of the master, a second virtual firewall between the master and the node.

## Description

### CROSS-REFERENCE TO RELATED APPLICATIONS

The present application claims priority from Chinese Patent Application No. 202310700836.1 filed on June 13, 2023, the entirety of which is incorporated hereby by reference.

### TECHNICAL FIELD

The present application relates to the technical field of communications, and particularly relates to a firewall configuration method, a network function virtualization orchestrator, a server, and a computer-readable storage medium.

### BACKGROUND

To ensure security and reliability of telecommunication services, during deploying a cluster for carrying a telecommunication service, a master and a node in the cluster should be isolated from each other in network. To implement network isolation between the master and the node in the cluster, a firewall should be configured before creating the cluster, but network information of the node can be acquired after being created. Therefore, during configuring the firewall, the master may be unable to communicate with the node due to lacking the network information of the node.

To solve such a problem, currently, the firewall is configured to be completely open in an initial stage of creating the cluster, so that the master can communicate with the node, and after the node is created, a configuration of the firewall is modified to be partially open, so that the network isolation between the master and the node is implemented. However, there are potential safety hazards during the firewall being completely open, and frequent modifications to the configuration of the firewall involve complicated operations and are prone to cause errors. Therefore, how to implement the network isolation between the master and the node accurately and quickly is an urgent problem to be solved at present.

### SUMMARY

In a first aspect, an embodiment of the present application provides a firewall configuration method, including: acquiring a cluster creation request including network information of a master of a target cluster to be created; creating and configuring, based on the network information of the master, a first virtual firewall between the master and a network function virtualization orchestrator (NFVO); creating the master, and creating at least one node after the master is created and enters an operation state; and creating and configuring, based on network information of each of the at least one node having been created and the network information of the master, a second virtual firewall between the master and the node.

In a second aspect, an embodiment of the present application further provides a network function virtualization orchestrator (NFVO), including: an acquisition module configured to acquire a cluster creation request including network information of a master of a target cluster to be created; a firewall configuration module configured to create and configure, based on the network information of the master, a first virtual firewall between the master and the NFVO; a node creation module configured to create the master, and create at least one node after the master is created and enters an operation state, the firewall configuration module is further configured to create and configure, based on network information of each of the at least one node having been created and the network information of the master, a second virtual firewall between the master and the node.

In a third aspect, an embodiment of the present application further provides a server, including a processor, a memory, a computer program stored on the memory and executable by the processor, and a data bus configured to enable connection and communication between the processor and the memory, the computer program, during being executed by the processor, causes the processor to implement the firewall configuration method in the first aspect.

In a fourth aspect, an embodiment of the present application further provides a computer-readable storage medium stored with at least one computer program which, during being executed by at least one processor, causes the at least one processor to implement the firewall configuration method in the first aspect.

### BRIEF DESCRIPTION OF DRAWINGS

To explain technical solutions in embodiments of the present application more clearly, drawings for the description of the embodiments will be illustrated briefly, obviously, the drawings described below are some implementations of the present application, and other drawings may be obtained by those of ordinary skill in the art based on these drawings without any creative labor.
FIG. 1 is a schematic block diagram of a server according to an embodiment of the present application;
FIG. 2 is a schematic flowchart of a firewall configuration method according to an embodiment of the present application;
FIG. 3 is a schematic diagram of a deployment scenario of a master and a node according to an embodiment of the present application;
FIG. 4 is a schematic connection diagram of a master, a node and a virtual firewall according to an embodiment of the present application;
FIG. 5 is a flowchart illustrating some operations in a firewall configuration method according to an embodiment of the present application;
FIG. 6 is a schematic connection diagram of a master, a node and a virtual firewall according to an embodiment of the present application;
FIG. 7 is a schematic flowchart of a firewall configuration method according to an embodiment of the present application;
FIG. 8 is a schematic connection diagram of a master, a node and a virtual firewall according to an embodiment of the present application; and
FIG. 9 is a block diagram of a network function virtualization orchestrator according to an embodiment of the present application.

### DETAIL DESCRIPTION OF EMBODIMENTS

The technical solutions in the embodiments of the present application will be clearly and completely described below with reference to the accompanying drawings in the embodiments of the present application. Apparently, the described implementations are only part, but not all, of the implementations of the present application. All other implementations obtained by one of ordinary skill in the art based on the implementations in the present application without any creative labor fall into the protection scope of the present application.

The flowcharts shown in the figures are merely illustrative, and do not necessarily include all of contents and operations/steps, nor do they necessarily have to be performed in the order described. For example, some operations/steps may be decomposed, combined or partially combined, so that an actual order of performing the operations/steps may be changed according to an actual situation.

It is to be understood that the terminology used in the description of the present application herein is for the purpose of describing particular implementations only and is not intended to be limiting of the application. As used in the specification and claims of the present application, the singular forms "a", "an" and "the" are intended to include the plural forms as well, unless the context clearly indicates otherwise.

Currently, the firewall is configured to be completely open in an initial stage of creating a cluster, so that the master can communicate with the node, and after the node is created, a configuration of the firewall is modified to be partially open, so that network isolation between the master and the node is implemented. However, there are potential safety hazards during the firewall being completely open, and frequent modifications to the configuration of the firewall involve complicated operations and are prone to cause errors.

To solve such a problem, an embodiment of the present application provides a firewall configuration method, a server, a network function virtualization orchestrator (NFVO), and a computer-readable storage medium. The firewall configuration method includes: after acquiring a cluster creation request, creating and configuring, based on network information of a master carried in the cluster creation request, a first virtual firewall between the master and an NFVO; then creating the master of a cluster, and creating at least one node of the cluster after the master is created and enters an operation state; and finally, creating and configuring, based on network information of each of the at least one node having been created and the network information of the master, a second virtual firewall between the master and the node. In this manner, the firewall is not to be completely open or modified frequently, and the network isolation between the master and the node can be implemented automatically, accurately and quickly. In the embodiment of the present application, the server may be a single server, or may be a server cluster formed of a plurality of servers, which is not specifically limited in the embodiment of the present application.

Some implementations of the present application are described in detail below with reference to the accompanying drawings. The following implementations and features thereof may be combined with each other without conflict.

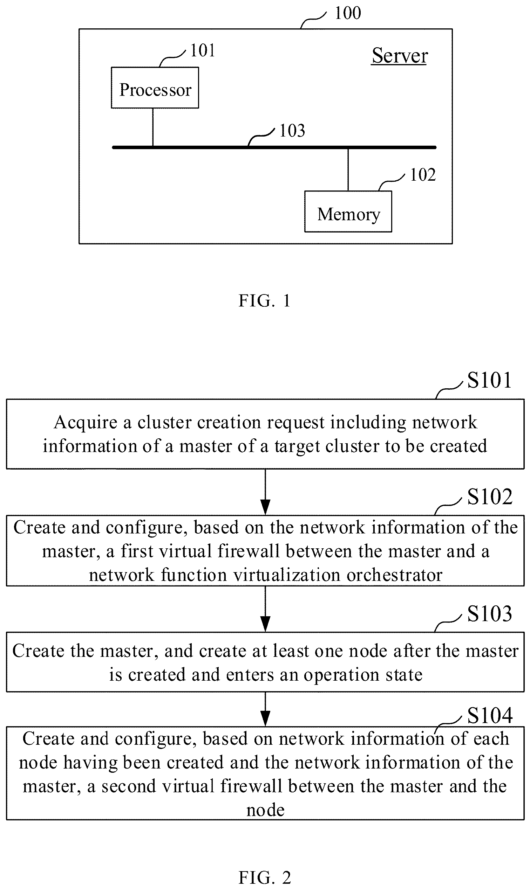

Referring to FIG. 1, FIG. 1 is a schematic block diagram of a server according to an embodiment of the present application.

As shown in FIG. 1, the server 100 includes a processor 101 and a memory 102 connected via a bus 103, which may be an inter-integrated circuit (I2C) bus.

The processor 101 is configured to provide computing and control capabilities to support operations of the entire server. The processor 101 may be a central processing unit (CPU), or the processor 101 may be any other general purpose processor, digital signal processor (DSP), application specific integrated circuit (ASIC), field-programmable gate array (FPGA), or any other programmable logic device, a discrete gate or a transistor logic device, a discrete hardware component, or the like. The general purpose processor may be a microprocessor or any conventional processor or the like.

The memory 102 may be a flash chip, a read-only memory (ROM), a magnetic disk, an optical disk, a USB stick, a removable hard disk, or the like.

Those skilled in the art will appreciate that the structure shown in FIG. 1 is merely a block diagram of partial structures associated with the solution according to the embodiment of the present application, and does not constitute any limitation to the server applied with the solution according to the embodiment of the present application, and the server may actually include more or fewer components than those shown in FIG. 1, or may have a combination or arrangement of components different from that shown in FIG. 1.

The processor 101 is further configured to run a computer program stored in the memory 102, and implement the firewall configuration method described in the embodiment of the present application during executing the computer program.

In some implementations, the processor 101 is configured to run the computer program stored in the memory, to perform following operations: acquiring a cluster creation request including network information of a master of a target cluster to be created; creating and configuring, based on the network information of the master, a first virtual firewall between the master and a network function virtualization orchestrator (NFVO); creating the master, and creating at least one node after the master is created and enters an operation state; and creating and configuring, based on network information of each of the at least one node having been created and the network information of the master, a second virtual firewall between the master and the node.

In some implementations, during creating and configuring, based on the network information of each of the at least one node having been created and the network information of the master, the second virtual firewall between the master and the node, the processor 101 may implement operations of: dividing, based on the network information of each of the at least one node having been created and a node grouping rule carried in the cluster creation request, all created nodes into a plurality of node groups; and creating and configuring, based on network information of each node in each of the node groups and the network information of the master, a second virtual firewall between the master and each of the node groups.

In some implementations, different second virtual firewalls are created between the master and different node groups, and second virtual firewalls the same are created between the master and the nodes in any one of the node groups.

In some implementations, after creating and configuring, based on the network information of each of the at least one node having been created and the network information of the master, the second virtual firewall between the master and the node, the processor 101 may further implement operations of: acquiring state information of each node; and displaying, in response to determining, based on the state information, that each node is currently in an operation state, a network topology of the target cluster in a cluster management page of the NFVO.

In some implementations, the processor 101 is further configured to implement operations of: after acquiring a cluster expansion request of the target cluster, creating at least one new node based on cluster expansion information carried in the cluster expansion request; and updating an access rule of the second virtual firewall based on network information of each of the at least one new node having been created.

In some implementations, after creating and configuring, based on the network information of each of the at least one node having been created and the network information of the master, the second virtual firewall between the master and the node, the processor 101 may further implement operations of: sending, after acquiring a cluster reduction request, cluster reduction information carried in the cluster reduction request to the master, so that the master removes a corresponding node from the target cluster based on the cluster reduction information; and deleting, based on the cluster reduction information, an access rule, corresponding to the node having been removed, from the second virtual firewall.

In some implementations, after creating and configuring, based on the network information of each of the at least one node having been created and the network information of the master, the second virtual firewall between the master and the node, the processor 101 may further implement operations of: sending, after acquiring a cluster termination request of the target cluster, the cluster termination request to the master, so that the master deletes all nodes in the target cluster based on the cluster termination request; deleting the master of the target cluster in response to determining that all the nodes in the target cluster have been deleted; and in response to determining that the master has been deleted, deleting an access rule corresponding to the master from the first virtual firewall.

It should be noted that, as is clear to those skilled in the art, for convenience and simplicity of description, any specific operation of the server described above may be referred to corresponding processes in implementations of the firewall configuration method described below, and are not detailed here.

Hereinafter, the firewall configuration method provided in the embodiment of the present application will be described in detail with reference to the scenario shown in FIG. 1. It should be noted that the scenario shown in FIG. 1 is only used to explain the firewall configuration method provided in the embodiment of the present application, but does not constitute any limitation to the application scenario of the firewall configuration method provided in the embodiment of the present application.

Referring to FIG. 2, FIG. 2 is a schematic flowchart of a firewall configuration method according to an embodiment of the present application. The firewall configuration method may be applied to a server or an NFVO to accurately and quickly implement network isolation between a master and a node.

As shown in FIG. 2, the firewall configuration method includes following operations S101 to S104.

At operation S101, acquiring a cluster creation request including network information of a master of a target cluster to be created.

In this operation, the target cluster is a cluster to be created, and may include one master and at least one node. The cluster creation request includes network information of the master of the target cluster to be created, which includes, but is not limited to, an IP address and a port of the master. In some implementations, the cluster creation request may further include resource specification information for creating the master, which is used to describe computing resources desired by the master.

In some implementations, a user terminal displays a cluster management page including a cluster creation option, and in response to a triggering operation of a user on the cluster creation option, displays a cluster creation page including a confirm button, and acquires cluster creation information input or uploaded by the user on the cluster creation page, and, in response to a triggering operation of the user on the confirm button, generates a cluster creation request based on the cluster creation information, and send s the cluster creation request to a server; the server receives the cluster creation request sent from the user terminal, the cluster creation request includes network information of the master of the target cluster to be created, and the triggering operation includes a click, a double click, or a long press. In some implementations, the cluster creation request further includes a resource specification for the master, which is used to describe a resource size for the master.

In some implementations, the server controls a display device to display a cluster management page including a cluster creation option, and in response to a triggering operation of a user on the cluster creation option, displays a cluster creation page including a confirm button, and acquires cluster creation information input or uploaded by the user on the cluster creation page, and, in response to a trigger operation of the user on the confirm button, generates a cluster creation request based on the cluster creation information. The display device may be a display screen integrated with the server, or may be an external display communicatively connected with the server, which is not specifically limited in the embodiment of the present application.

At operation S102, creating and configuring, based on the network information of the master, a first virtual firewall between the master and a network function virtualization orchestrator.

In this operation, one physical device may be logically divided into a plurality of virtual firewalls, and each virtual firewall is software or a service running in a virtualization environment. The physical device may be a server or an electronic device.

In some implementations, the server generates a first firewall creation request based on network information of the NFVO and the network information of the master, and sends the first firewall creation request to a hardware firewall, and after receiving the first firewall creation request, the hardware firewall acquires the network information of the master and the network information of the NFVO from the first firewall creation request, creates a first virtual firewall based on the network information of the master and the network information of the NFVO, and configures an access rule between the master and the NFVO on the first virtual firewall to enable a communication between the master and the NFVO.

In some implementations, before operation S 102, whether the cluster creation request carries information of sharing a firewall is determined, and in response to determining that the cluster creation request does not carry the information of sharing a firewall, a first virtual firewall between the master and the NFVO is created and configured based on the network information of the master and the network information of the NFVO, and in response to determining that the cluster creation request carries the information of sharing a firewall, a target virtual firewall is determined from a firewall identifier in the information of sharing a firewall, and an access rule between the master and the NFVO is configured on the target virtual firewall based on the network information of the master and the network information of the NFVO, to enable a communication between the master and the NFVO. In these implementations, no new virtual firewall is created in a case of sharing a firewall, but only an access rule between the master and the NFVO is configured on the corresponding firewall to enable the communication between the master and the NFVO, thereby saving computing resources.

In some implementations, in response to the cluster creation request carrying the information of sharing a firewall, a first firewall creation request is generated based on the network information of the NFVO, the network information of the master, and the information of sharing a firewall, and is sent to a hardware firewall; after receiving the first firewall creation request, the hardware firewall acquires the information of sharing a firewall, the network information of the master and the network information of the NFVO from the first firewall creation request, determines a target virtual firewall from a firewall identifier in the information of sharing a firewall, and configures an access rule between the master and the NFVO on the target virtual firewall based on the network information of the master and the network information of the NFVO, to enable a communication between the master and the NFVO.

At operation S103, creating the master, and creating at least one node after the master is created and enters an operation state.

In this operation, in a process of creating the master, a state of the master is queried at a preset interval until a creation of the master is completed and the master enters an operation state. In response to the creation of the master being completed and the master entering the operation state, at least one node is created. The master and the node are deployed on different devices.

In some implementations, the cluster creation request further includes resource specification information of the master, and the master may be created by: creating the master based on the resource specification information and the network information of the master. Illustratively, a first virtual machine is created based on the resource specification information of the master; and after the first virtual machine is created, network information of the first virtual machine is updated to the network information of the master, and an initialization on the master is performed on the first virtual machine to initialize the first virtual machine into the master. The resource specification information of the master is used to describe computing resources for creating the master.

In some implementations, the master may be created based on the resource specification information and the network information of the master by: creating the master by the server in a local computer based on the resource specification information and the network information of the master; or generating a master creation instruction by the server based on the resource specification information and the network information of the master, and sending the master creation instruction to a computer device communicatively connected with the server; and after receiving the master creation instruction, creating the master by the computer device based on the resource specification information and the network information carried in the master creation instruction.

In some implementations, the cluster creation request further includes a first number of nodes to be created, and resource specification information of each node, and the at least one node may be created by: creating the first number of nodes based on the resource specification information of each node. The resource specification information of each node is used to describe computing resources for creating the node. The computing resources for creating different nodes may be the same or different, which is not specifically limited in the embodiment of the present application.

For example, the first number is 3, and each node is to be created based on x computing resources, then three nodes, including node A1, node A2, and node A3, are created so that each of the node A1, the node A2, and the node A3 is created based on x computing resources. For another example, the first number is 3, and the nodes are to be created based on x1, x2 and x3 computing resources, respectively, then three nodes, including node A1, node A2, and node A3, are created, so that the node A1, the node A2, and the node A3 are created based on x1, x2 and x3 computing resources, respectively.

Illustratively, for each node, a second virtual machine is created based on the resource specification information of the node; and after the second virtual machine is created, network information is assigned to the second virtual machine, and an initialization on the node is performed on the second virtual machine to initialize the second virtual machine into the node.

For example, the first number is 3, and the nodes are to be created based on x1, x2 and x3 computing resources, respectively, then a second virtual machine B1, a second virtual machine B2, and a second virtual machine B3 may be created with x1, x2, and x3 computing resources, respectively, and network information is to be assigned to the second virtual machine B1, the second virtual machine B2, and the second virtual machine B3. For example, network information w1, w2 and w3 are assigned to the second virtual machine B1, the second virtual machine B2, and the second virtual machine B3, respectively. Then, an initialization on the nodes may respectively be performed on the second virtual machine B1, the second virtual machine B2, and the second virtual machine B3, to obtain node A1, node A2, and node A3.

In some implementations, the cluster creation request further includes a first number of nodes to be created, and resource specification information and network information of each node, and the at least one node may be created by: creating the first number of nodes based on the resource specification information and the network information of each node.

Illustratively, for each node, a second virtual machine is created based on the resource specification information of the node; and after the second virtual machine is created, network information of the second virtual machine is updated to the network information of the node, and an initialization on the node is performed on the second virtual machine to initialize the second virtual machine into the node.

For example, the first number is 3, three nodes are to be created based on x1, x2 and x3 computing resources, respectively, and the network information of the three nodes is w1, w2 and w3, respectively, then a second virtual machine B1, a second virtual machine B2, and a second virtual machine B3 may be created with x1, x2, and x3 computing resources, respectively, and the network information of the second virtual machine B1, the second virtual machine B2, and the second virtual machine B3 is updated to w1, w2 and w3, respectively. Then, an initialization on the nodes may respectively be performed on the second virtual machine B1, the second virtual machine B2, and the second virtual machine B3, to obtain node A1, node A2, and node A3.

In some implementations, the first number of nodes may be created based on the resource specification information of each node by: creating the first number of nodes in a local computer by the server based on the resource specification information of each node; or generating a node creation instruction by the server based on the first number and the resource specification information of each node, and sending the node creation instruction to a computer device communicatively connected with the server; and after receiving the node creation instruction, creating at least one node by the computer device based on the first number and the resource specification information of each node in the node creation instruction.

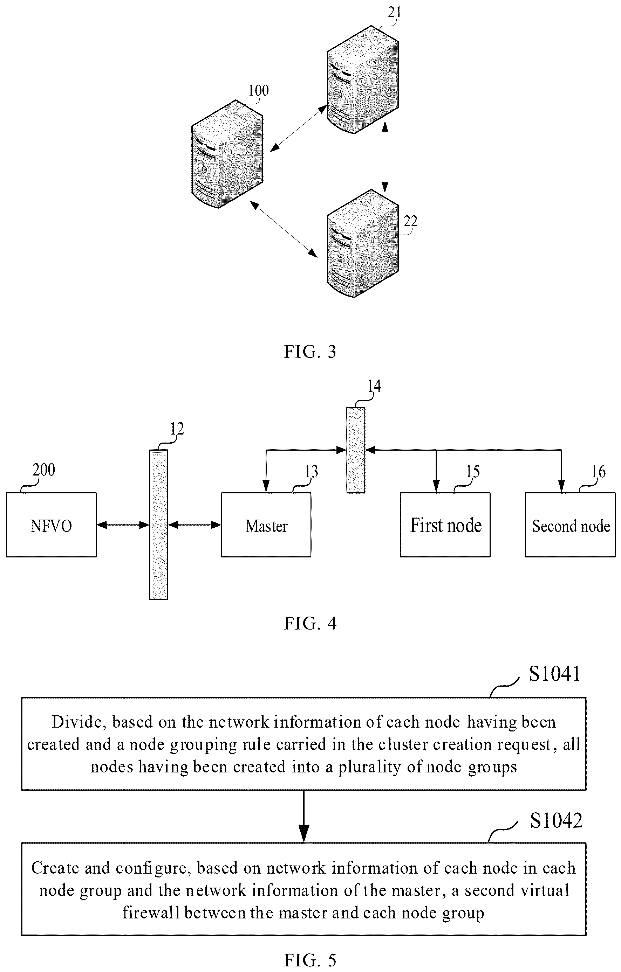

In some implementations, the master and the node are located on different servers. For example, as shown in FIG. 3, an NFVO is deployed in a server 100, a master of a target cluster is created in the server 100, and all nodes of the target cluster are created in a first computer device 21. Alternatively, the master of the target cluster is created in the server 100, some nodes of the target cluster are created in the first computer device 21, and other nodes of the target cluster are created in a second computer device 22. Alternatively, all nodes of the target cluster are created in the server 100, and the master of the target cluster is created in the first computer device 21 or the second computer device 22. Alternatively, some nodes of the target cluster are created in the server 100, other nodes of the target cluster are created in the first computer device 21, and the master of the target cluster is created in the first computer device 21. Alternatively, all nodes of the target cluster are created in the first computer device 21, and the master of the target cluster is created in the second computer device 22.

At operation S104, creating and configuring, based on network information of each of the at least node having been created and the network information of the master, a second virtual firewall between the master and the node.

In this operation, after the at least one node is created, the master in the target cluster may acquire and send the network information of each of the at least one node having been created to the server running the NFVO. Based on the network information of each of the at least one node having been created and the network information of the master, the server creates and configures the second virtual firewall between the master and the node. After the second virtual firewall is created and configured, the master can communicate with each node, so that the master and the at least one node form the target cluster.

For example, as shown in FIG. 4, a first virtual firewall 12 is disposed between a network function virtualization orchestrator 200 and a master 13, so that network isolation between the network function virtualization orchestrator 200 and the master 13 can be implemented. A second virtual firewall 14 is disposed between the master 13 and first and second nodes 15, 16, so that network isolation between the master 13 and the first and second nodes 15, 16 can be implemented.

In some implementations, the second virtual firewall between the master and the node may be created and configured based on the network information of each of the at least one node having been created and the network information of the master by: generating a second firewall creation request based on the network information of each of the at least one node having been created and the network information of the master, and sending the second firewall creation request to a hardware firewall; and creating, by the hardware firewall, a second virtual firewall based on the network information of each of the at least one node having been created and the network information of the master, and configuring an access rule between the master and each node on the second virtual firewall to enable a communication between the master and each node.

In some implementations, as shown in FIG. 5, the operation S104 includes following sub-operations S1041 to S1042.

At sub-operation S 1041, dividing, based on the network information of each of the at least one node having been created and a node grouping rule carried in the cluster creation request, all nodes having been created into a plurality of node groups.

In this operation, each node group may include at least one node, and the node grouping rule carried in the cluster creation request may be set by a user based on an actual situation, which is not specifically limited in the embodiment of the present application. For example, the node grouping rule may include a rule of grouping the nodes based on IP address segments of the nodes, or based on regions that IP addresses of the nodes belong to, or base on servers that IP addresses of the nodes belong to.

For example, the nodes having been created include a node C1, a node C2, a node C3, a node C4 and a node C5, IP addresses of the node C1, the node C2 and the node C3 are in a first preset IP address segment, and IP addresses of the node C4 and the node C5 are in a second preset IP address segment. Therefore, the node C1, the node C2 and the node C3 may be divided into one node group, and the node C4 and the node C5 may be divided into another node group. For another example, IP addresses of the node C1 and the node C2 belong to a server A, and IP addresses of the node C3, the node C4 and the node C5 belong to a server B. Therefore, the node C1, and the node C2 may be divided into one node group, and the node C3, the node C4 and the node C5 may be divided into another node group.

At sub-operation S1042, creating and configuring, based on network information of each node in each of the node groups and the network information of the master, a second virtual firewall between the master and each of the node groups.

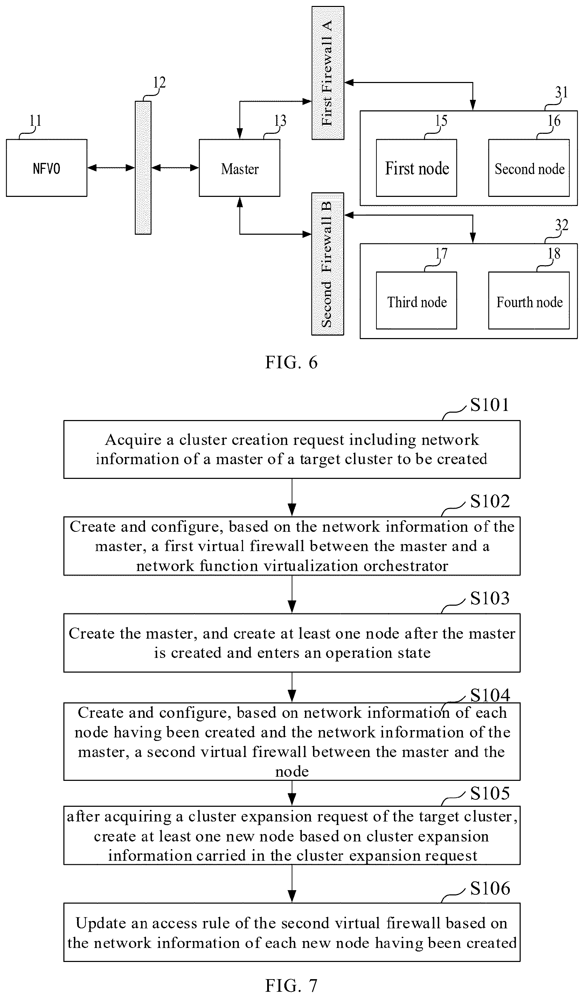

In this operation, different second virtual firewalls are created between the master and different node groups, second virtual firewalls the same are created between the master and the nodes in any one of the node groups, and each of the node groups corresponds to one second virtual firewall. For example, as shown in FIG. 6, a second virtual firewall A is deployed between the master 13 and a first node group 31, and a second virtual firewall B is deployed between the master 13 and a second node group 32. The first node group 31 includes a first node 15 and a second node 16, and the second virtual firewall A is configured to implement network isolation between the master 13 and the first and second nodes 15, 16. The second node group 32 includes a third node 17 and a fourth node 18, and the second virtual firewall B is configured to implement network isolation between the master 13 and the third and fourth nodes 17, 18.

In some implementations, the second virtual firewall between the master and each of the node groups may be created and configured based on network information of each node in each of the node groups and the network information of the master by: for each of the node groups, generating a third firewall creation request based on the network information of each node in the node group and the network information of the master, and sending the third firewall creation request to a hardware firewall; and after receiving the third firewall creation request, creating, by the hardware firewall based on the network information of each node and the network information of the master in the third firewall creation request, the second virtual firewall between the master and each node in the node group, and configuring an access rule between the master and each node in the node group on the second virtual firewall.

In some implementations, after operation S104, the firewall configuration method further includes: acquiring state information of each node; and displaying, in response to determining based on the state information that each node is currently in an operation state, a network topology of the target cluster in a cluster management page of the NFVO. The state information of each node may be acquired by the master and then sent to the server deployed with the NFVO. After acquiring state information of each node, the server may determine a current state of each node based on the state information, and display, in response to each node being currently in the operation state, the network topology of the target cluster in the cluster management page of the NFVO. In this implementation, by displaying the network topology of the target cluster in the cluster management page after the master, the node and the virtual firewall between the master and the node are created, it facilitates the user to know that the target cluster has been created, thereby improving the user experience.

In some implementations, as shown in FIG. 7, after operation S104, the firewall configuration method further includes following operations S105 to S106.

At operation S105, after acquiring a cluster expansion request of the target cluster, creating at least one new node based on cluster expansion information carried in the cluster expansion request.

In this operation, the cluster expansion information carried in the cluster expansion request includes the number of nodes to be expanded, and resource specification information of each node. The number of nodes to be expanded and the resource specification information of each node may be configured by a user according to an actual situation, which is not specifically limited in the embodiment of the present application.

In some implementations, a user terminal displays a cluster management page including a cluster creation option and a cluster expansion option, and in response to a triggering operation of a user on the cluster expansion option, a cluster expansion page is displayed, the cluster expansion page includes a first input box for a cluster identifier, and a second input box for cluster expansion information, by acquiring a cluster identifier and cluster expansion information selected or input by the user, the cluster identifier selected or input by the user is displayed in the first input box, and the cluster expansion information selected or input by the user is displayed in the second input box, and in response to a triggering operation of the user on a confirm button in the cluster expansion page, a cluster expansion request is generated based on the cluster identifier displayed in the first input box and the cluster expansion information displayed in the second input box, and sent to the server, after receiving the cluster expansion request by the server, if the cluster identifier carried in the cluster expansion request is a cluster identifier of the target cluster, the server determines that a cluster expansion request of the target cluster is acquired.

In some implementations, the server controls a display device to display a cluster management page including a cluster creation option and a cluster expansion option, and in response to a triggering operation of a user on the cluster expansion option, a cluster expansion page is displayed, the cluster expansion page includes a first input box for a cluster identifier, and a second input box for cluster expansion information, by acquiring a cluster identifier and cluster expansion information selected or input by the user, the cluster identifier selected or input by the user is displayed in the first input box, and the cluster expansion information selected or input by the user is displayed in the second input box, and in response to a triggering operation of the user on a confirm button in the cluster expansion page, a cluster expansion request is generated based on the cluster identifier displayed in the first input box and the cluster expansion information displayed in the second input box, if the cluster identifier carried in the cluster expansion request is a cluster identifier of the target cluster, it is determined that a cluster expansion request of the target cluster is acquired by the server.

In some implementations, the cluster expansion information includes the number of nodes to be expanded, and resource specification information of each node to be created, and at least one new node may be created based on cluster expansion information carried in the cluster expansion request by: creating, based on the resource specification information of each node to be created, new nodes in the number of nodes to be expanded. The resource specification information of each node to be created is used to describe computing resources for creating each new node. The computing resources for creating the new nodes may be the same or different, which is not specifically limited in the embodiment of the present application.

For example, to expand two nodes with x4 computing resources for creating each node, then two new nodes, including node A4 and node A5, may be created with each node being created based on x4 computing resources. For another example, if the two nodes are to be created based on x5 and x6 computing resources, respectively, then two new nodes, including node A4 and node A5, may be created with x5 and x6 computing resources, respectively.

At operation S106, updating an access rule of the second virtual firewall based on the network information of each new node having been created.

In this operation, after all the new nodes are created, an access rule of the second virtual firewall corresponding to the firewall identifier in the cluster expansion request may be updated based on the network information of each new node having been created. In some implementations, the network information of each new node having been created may be added to an access list of the second virtual firewall corresponding to the firewall identifier in the cluster expansion request, and each new node having been created and the master can access each other through the second virtual firewall.

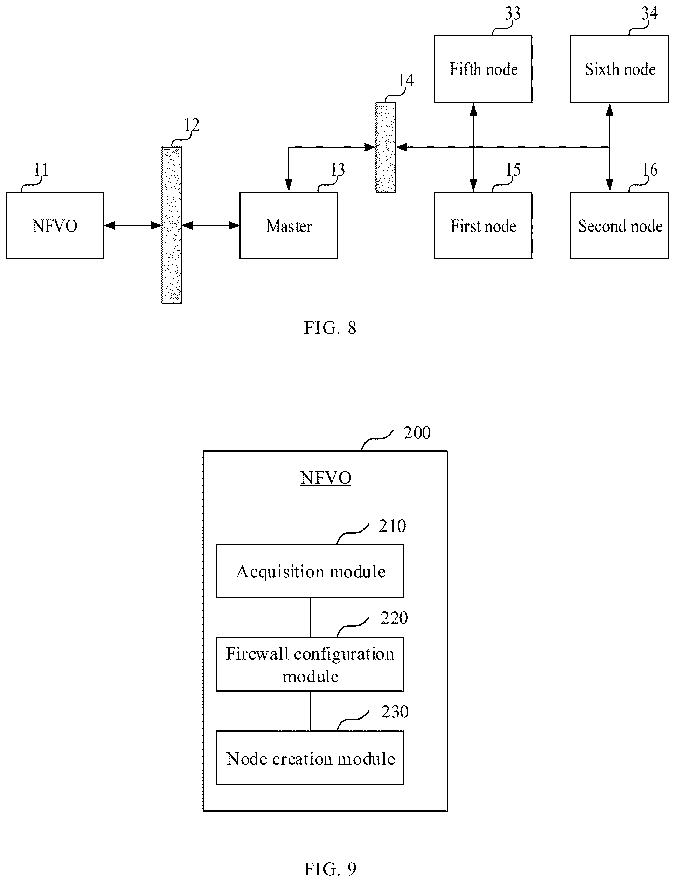

For example, as shown in FIG. 4, the target cluster includes a first node 15 and a second node 16 before being expanded, and after two new nodes are expanded for the target cluster, an access rule of the second virtual firewall 14 may be updated based on the network information of the two new nodes, so that as shown in FIG. 8, the target cluster having been expanded includes the first node 15, the second node 16, a fifth node 33, and a sixth node 34, and the fifth node 33 and the sixth node 34 are isolated from the master 13 in network by the second virtual firewall 14.

In some implementations, the server generates an access rule addition request based on the network information of each new node having been created and the firewall identifier in the cluster expansion request, and sends the access rule addition request to a hardware firewall, after receiving the access rule addition request, the hardware firewall determines the second virtual firewall to add an access rule based on the firewall identifier in the access rule addition request, and adds the access rule to the second virtual firewall based on the network information of each new node in the access rule addition request.

In some implementations, in response to the cluster expansion request not carrying any firewall identifier, based on the network information of each new node having been created and the network information of the master corresponding to the cluster identifier, a second virtual firewall between the master corresponding to the cluster identifier and each new node is created and configured. For example, before being expanded, the target cluster includes a master M, a node D1, and a node D2, and a second virtual firewall C is deployed between the master M and the nodes D1, D2. During expanding the target cluster, the user does not select or input any firewall identifier, which indicates that a new node to be created does not share a virtual firewall with the nodes having been created. After expanding of the target cluster is completed, a second virtual firewall D is deployed between the master M and new nodes D3 and D4, so that network isolation between the master M and the nodes D1 and D2 is implemented by the second virtual firewall C, and network isolation between the master M and the nodes D3 and D4 is implemented by the second virtual firewall D.

In some implementations, after acquiring a cluster reduction request, cluster reduction information carried in the cluster reduction request is sent to the master, so that the master removes a corresponding node from the target cluster based on the cluster reduction information; and based on the cluster reduction information, an access rule corresponding to the node having been removed is deleted from the second virtual firewall. The cluster reduction information includes a node ID and network information of the node to be removed. For example, before being reduced, the target cluster includes a master M, a node D1, a node D2, a node D3 and a node D4, and the cluster reduction information includes node IDs and network information of the nodes D2 and D3, so that the nodes D2 and D3 are removed from the target cluster, an access rule corresponding to the node D2 is deleted from the second virtual firewall C between the master M and the node D2, and an access rule corresponding to the node D3 is deleted from the second virtual firewall D between the master M and the node D3, thereby completing a reduction of the target cluster.

In some implementations, the access rule corresponding to the node having been removed may be deleted from the second virtual firewall based on the cluster reduction information by: generating, by the server, an access rule deletion request from the cluster identifier and the cluster reduction information carried in the cluster reduction request, and sending the access rule deletion request to a hardware firewall; and after receiving the access rule deletion request, determining, by the hardware firewall, the second virtual firewall, from which an access rule is to be deleted, based on the cluster identifier in the access rule deletion request, and deleting the access rule corresponding to the node ID in the cluster reduction information from the second virtual firewall.

In some implementations, in response to all access rules of the second virtual firewall being deleted, the second virtual firewall is deleted. For example, before being reduced, the target cluster includes a master M, a node D1, a node D2, a node D3 and a node D4, a second virtual firewall C is deployed between the master M and the nodes D1, D2, a second virtual firewall D is deployed between the master M and the nodes D3 and D4, and the cluster reduction information includes node IDs and network information of the nodes D1 and D2, so that the nodes D1 and D2 are removed from the target cluster, and access rules corresponding to the nodes D1 and D2 are deleted from the second virtual firewall C. Since all the access rules of the second virtual firewall C have been deleted, the second virtual firewall C is deleted.

In some implementations, a user terminal displays a cluster management page including a cluster creation option, a cluster expansion option, and a cluster reduction option, and in response to a triggering operation of a user on the cluster reduction option, a cluster reduction page is displayed, the cluster reduction page includes a third input box for a cluster identifier, and a fourth input box for cluster reduction information, by acquiring a cluster identifier and cluster reduction information selected or input by the user, the cluster identifier selected or input by the user is displayed in the third input box, and the cluster reduction information selected or input by the user is displayed in the fourth input box, and in response to a triggering operation of the user on a confirm button in the cluster reduction page, a cluster reduction request is generated based on the cluster identifier displayed in the third input box and the cluster reduction information displayed in the fourth input box, and sent to the server, after receiving the cluster reduction request by the server, if the cluster identifier carried in the cluster reduction request is a cluster identifier of the target cluster, the server determines that a cluster reduction request of the target cluster is acquired.

In some implementations, the server controls a display device to display a cluster management page including a cluster creation option, a cluster expansion option, and a cluster reduction option., and in response to a triggering operation of a user on the cluster reduction option, a cluster reduction page is displayed, the cluster reduction page includes a third input box for a cluster identifier, and a fourth input box for cluster reduction information, by acquiring a cluster identifier and cluster reduction information selected or input by the user, the cluster identifier selected or input by the user is displayed in the third input box, and the cluster reduction information selected or input by the user is displayed in the fourth input box, and in response to a triggering operation of the user on a confirm button in the cluster reduction page, a cluster reduction request is generated based on the cluster identifier displayed in the third input box and the cluster reduction information displayed in the fourth input box, if the cluster identifier carried in the cluster reduction request is a cluster identifier of the target cluster, it is determined that a cluster reduction request of the target cluster is acquired by the server.

In some implementations, in response to all access rules of the second virtual firewall having been deleted, the server generates a firewall deletion request based on a firewall identifier of the second virtual firewall, and sends the firewall deletion request to a hardware firewall, and after receiving the firewall deletion request, the hardware firewall deletes the second virtual firewall corresponding to the firewall identifier in the firewall deletion request.

In some implementations, after acquiring a cluster termination request of the target cluster, the cluster termination request is sent to the master, so that the master deletes all nodes in the target cluster based on the cluster termination request, and in response to determining that all the nodes in the target cluster have been deleted, the master of the target cluster is deleted, in response to the master having been deleted, an access rule corresponding to the master is deleted from the first virtual firewall. The cluster termination request includes a cluster identifier of a cluster to be terminated, which may be any cluster having been created.

In some implementations, a user terminal displays a cluster management page including a cluster creation option, a cluster expansion option, a cluster reduction option, and a cluster termination option, and in response to a triggering operation of a user on the cluster termination option, a cluster termination page is displayed, the cluster termination page includes a fifth input box for a cluster identifier, by acquiring a cluster identifier selected or input by the user, the cluster identifier selected or input by the user is displayed in the fifth input box, and in response to a triggering operation of the user on a confirm button in the cluster termination page, a cluster termination request is generated based on the cluster identifier displayed in the fifth input box, and sent to the server, after receiving the cluster termination request by the server, if the cluster identifier carried in the cluster termination request is a cluster identifier of the target cluster, the server determines that a cluster termination request of the target cluster is acquired.

In some implementations, the server controls a display device to display a cluster management page including a cluster creation option, a cluster expansion option, a cluster reduction option, and a cluster termination option, and in response to a triggering operation of a user on the cluster termination option, a cluster termination page is displayed, the cluster termination page includes a fifth input box for a cluster identifier, by acquiring a cluster identifier selected or input by the user, the cluster identifier selected or input by the user is displayed in the fifth input box, and in response to a triggering operation of the user on a confirm button in the cluster termination page, a cluster termination request is generated based on the cluster identifier displayed in the fifth input box, if the cluster identifier carried in the cluster termination request is a cluster identifier of the target cluster, it is determined that a cluster termination request of the target cluster is acquired by the server.

It is to be understood that the user may also perform expansion, reduction, or termination on a cluster other than the target cluster, and the specific implementation processes may refer to the foregoing specific implementations on the target cluster, which are not repeated here. The server may determine a cluster to be expanded based on a cluster identifier in the cluster expansion request, determine a cluster to be reduced based on a cluster identifier in the cluster reduction request, and determine a cluster to be terminated based on a cluster identifier in the cluster termination request.

Referring to FIG. 9, FIG. 9 is a block diagram of a network function virtualization orchestrator according to an embodiment of the present application.

As shown in FIG. 9, a network function virtualization orchestrator (NFVO) 200 includes: an acquisition module 210 configured to acquire a cluster creation request including network information of a master of a target cluster to be created; a firewall configuration module 220 configured to create and configure, based on the network information of the master, a first virtual firewall between the master and the NFVO; a node creation module 230 configured to create the master, and create at least one node after the master is created and enters an operation state, the firewall configuration module 220 is further configured to create and configure, based on network information of each node having been created and the network information of the master, a second virtual firewall between the master and the node.

In some implementations, the firewall configuration module 220 is further configured to: divide, based on the network information of each node having been created and a node grouping rule carried in the cluster creation request, all nodes having been created into a plurality of node groups; and create and configure, based on network information of each node in each of the node groups and the network information of the master, a second virtual firewall between the master and each of the node groups.

In some implementations, different second virtual firewalls are created between the master and different node groups, and second virtual firewalls the same are created between the master and the nodes in any one of the node groups.

In some implementations, the acquisition module 210 is further configured to acquire state information of each node; and the network function virtualization orchestrator 200 further includes: a display module configured to display, in response to determining based on the state information that each node is currently in the operation state, a network topology of the target cluster in a cluster management page of the NFVO.

In some implementations, the network function virtualization orchestrator 200 further includes a cluster expansion module configured to: create, after acquiring a cluster expansion request of the target cluster, at least one new node based on cluster expansion information carried in the cluster expansion request; and update an access rule of the second virtual firewall based on network information of each new node having been created.

In some implementations, the network function virtualization orchestrator 200 further includes a cluster reduction module configured to: send, after acquiring a cluster reduction request, cluster reduction information carried in the cluster reduction request to the master, so that the master removes a corresponding node from the target cluster based on the cluster reduction information; and delete, based on the cluster reduction information, an access rule, corresponding to the node having been removed, from the second virtual firewall.

In some implementations, the network function virtualization orchestrator 200 further includes a cluster termination module configured to: send, after acquiring a cluster termination request of the target cluster, the cluster termination request to the master, so that the master deletes all nodes in the target cluster based on the cluster termination request; delete the master of the target cluster in response to determining that all the nodes in the target cluster have been deleted; and delete, in response to the master being deleted, an access rule corresponding to the master from the first virtual firewall.

It should be noted that, as can be clearly understood by those skilled in the art, for convenience and simplicity of description, implementations for the specific operations of the network function virtualization orchestrator described above may be referred to the corresponding processes in the foregoing firewall configuration method, and details thereof are not repeated here.

An embodiment of the present application further provides a computer-readable storage medium storing at least one computer program which, during being executed by at least one processor, causes the at least one processor to implement the firewall configuration method according to the embodiment of the present application.

The storage medium may be an internal storage unit of the server described in the foregoing implementations, for example, may be a hard disk or a memory of the server. The storage medium may also be an external storage device of the server, such as a plug-in hard disk, a smart media card (SMC), a secure digital (SD) card, a flash card, or the like equipped on the server.

Those of ordinary skill in the art will appreciate that all or some operations of the above described method, function modules/units in the apparatus may be implemented as software, firmware, hardware, and suitable combinations thereof. In a hardware embodiment, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and being accessible by a computer. Moreover, it is well known to those of ordinary skill in the art that a communication medium typically includes a computer-readable instruction, a data structure, a program module, or other data in a data signal modulated in a carrier wave or other transport mechanism, and may include any information delivery medium.

It should be understood that the term "and/or" as used in the description and claims of the present application refers to any and all possible combinations of one or more of the associated listed items and includes such combinations. It should be noted that the term "comprise", "include " or any variant thereof used herein means to be non-exclusive so that a process, method, item or system including a series of elements includes not only said elements, but also other elements not explicitly listed, or inherent elements of such process, method, item or system. In the absence of more limitations, an element defined by "comprising a ..." do not exclude the existence of additional identical elements in the process, method, item or system including the element.

The above serial numbers in the embodiments of the present application are merely for description, and do not represent any preference. The above merely describes specific embodiments of the present application, but the scope of the present application is not limited thereto, and any person skilled in the art can easily conceive various equivalent modifications or substitutions within the technical scope of the present application, and these modifications or substitutions should be covered within the scope of the present application. Therefore, the protection scope of the present application shall be determined by the scope of the claims.

## Claims

1. A firewall configuration method, comprising:
acquiring a cluster creation request comprising network information of a master of a target cluster to be created;
creating and configuring, based on the network information of the master, a first virtual firewall between the master and a network function virtualization orchestrator, NFVO;
creating the master, and creating at least one node after the master is created and enters an operation state; and
creating and configuring, based on network information of each node having been created and the network information of the master, a second virtual firewall between the master and the node.

2. The firewall configuration method according to claim 1, wherein creating and configuring, based on the network information of each node having been created and the network information of the master, the second virtual firewall between the master and the node comprises:
dividing, based on the network information of each node having been created and a node grouping rule carried in the cluster creation request, all nodes having been created into a plurality of node groups; and
creating and configuring, based on network information of each node in each of the node groups and the network information of the master, a second virtual firewall between the master and each of the node groups.

3. The firewall configuration method according to claim 2, wherein different second virtual firewalls are created between the master and different node groups, and second virtual firewalls the same are created between the master and the nodes in any one of the node groups.

4. The firewall configuration method according to claim 1, further comprising:
after creating and configuring, based on the network information of each node having been created and the network information of the master, the second virtual firewall between the master and the node, acquiring state information of each node; and
displaying, in response to determining based on the state information that each node is currently in the operation state, a network topology of the target cluster in a cluster management page of the NFVO.

5. The firewall configuration method according to claim 1, further comprising:
after acquiring a cluster expansion request of the target cluster, creating at least one new node based on cluster expansion information carried in the cluster expansion request; and
updating an access rule of the second virtual firewall based on the network information of each new node having been created.

6. The firewall configuration method according to any one of claims 1 to 5, further comprising:
after creating and configuring, based on the network information of each node having been created and the network information of the master, the second virtual firewall between the master and the node, sending, after acquiring a cluster reduction request, cluster reduction information carried in the cluster reduction request to the master, so that the master removes a corresponding node from the target cluster based on the cluster reduction information; and
deleting, based on the cluster reduction information, an access rule, corresponding to the node having been removed, from the second virtual firewall.

7. The firewall configuration method according to any one of claims 1 to 5, further comprising:
after creating and configuring, based on the network information of each node having been created and the network information of the master, the second virtual firewall between the master and the node, sending, after acquiring a cluster termination request of the target cluster, the cluster termination request to the master, so that the master deletes all nodes in the target cluster based on the cluster termination request;
deleting the master of the target cluster in response to determining that all the nodes in the target cluster have been deleted; and
in response to the master being deleted, deleting an access rule corresponding to the master from the first virtual firewall.

8. A network function virtualization orchestrator, NFVO, comprising:
an acquisition module configured to acquire a cluster creation request comprising network information of a master of a target cluster to be created;
a firewall configuration module configured to create and configure, based on the network information of the master, a first virtual firewall between the master and the NFVO;
a node creation module configured to create the master, and create at least one node after the master is created and enters an operation state,
wherein the firewall configuration module is further configured to create and configure, based on network information of each node having been created and the network information of the master, a second virtual firewall between the master and the node.

9. A server, comprising a processor, a memory, a computer program stored on the memory and executable by the processor, and a data bus configured to enable connection and communication between the processor and the memory, wherein the computer program, during being executed by the processor, causes the processor to implement the firewall configuration method according to any one of claims 1 to 7.

10. A computer-readable storage medium storing at least one computer program, the at least one computer program, during being executed by at least one processor, causes the at least one processor to implement the firewall configuration method according to any one of claims 1 to 7.
